# DEMANDE DE BREVET EUROPEEN

(11) **EP 1 923 165 A1**
(43) Date de publication de la demande: **21.05.2008**
(21) Numéro de dépôt: 07301531.5
(22) Date de dépôt: 08.11.2007
(51) Int. Cl.: B23K 26/24, B23K 26/06

(54) **Procédé de soudage par faisceau laser à pénétration améliorée**

(30) Priorité: 17.11.2006 FR 0654966
(71) Demandeur: L'AIR LIQUIDE, Société Anonyme pour l'Etude et l'Exploitation des Procédés Georges Claude, 75007 Paris (FR)
(72) Inventeur: Ballerini, Gaia, 94210 Saint Maur Des Fosses (FR); Lefebvre, Philippe, 78250 Meulan (FR); Briand, Francis, 75009 Paris (FR)
(74) Mandataire: Pittis, Olivier

(57) **Abrégé**

L'invention concerne un procédé de soudage par faisceau laser (FL1, FL2) d'au moins une pièce métallique, de préférence de deux pièces métalliques l'une avec l'autre, dans lequel on met en oeuvre un premier faisceau laser (FL1) et on focalise ledit premier faisceau laser (FL1) de manière à ce qu'il vienne frapper au moins une pièce à souder et créer un capillaire de type heyhole (KH) comprenant une ouverture de keyhole ; on met en oeuvre un second faisceau laser (FL2) et on focalise ledit second faisceau laser (FL2) dans l'ouverture de type heyhole (KH) créée par ledit premier faisceau laser (FL1), et on réalise un soudage progressif de la ou des pièces par fusion du métal de la ou des pièces à souder, aux points d'impact des faisceaux laser (FL1, FL2) avec la ou les pièces à souder. La profondeur de pénétration (x) du premier faisceau laser (FL1) est supérieure à la profondeur de pénétration (y) du second faisceau laser (FL2).

## Description

L'invention porte sur un procédé de soudage par faisceau laser à pénétration de soudage augmentée.

En soudage par faisceau laser à pénétration élevée, c'est-à-dire typiquement jusqu'à 15 ou 20 mm environ, le faisceau laser est focalisé par un dispositif dédié sur la zone de travail, par exemple par une lentille, un miroir, une fibre optique ou leurs combinaisons.

La densité d'énergie au niveau de la zone d'impact doit être suffisante pour au moins assurer la formation et le maintien d'un capillaire de vapeurs ou « keyhole ».

En effet, la réalisation d'une soudure par faisceau laser repose sur le phénomène de fusion et de vaporisation de la matière au point d'impact du faisceau.

Pour des densités de puissance spécifiques, suffisamment élevées, c'est à dire d'au moins quelques MW/cm², un capillaire ou *keyhole* rempli de vapeurs métalliques se forme dans le matériau et permet un transfert direct de l'énergie au coeur de la matière.

Les parois du capillaire sont formées de métal en fusion et sont maintenues grâce à un équilibre dynamique s'établissant avec les vapeurs internes et en formant une sorte d'ouverture ou cavité centrale au coeur du bain liquide. En fonction du mouvement, le métal fondu contourne le capillaire pour former à l'arrière de ce dernier un « bain liquide » formé de métal fondu.

La dimension de cette ouverture ou cavité du keyhole est fonction de la tache ou spot laser focalisé sur la surface du matériau.

Plusieurs méthodes ou dispositifs sont utilisés pour améliorer les propriétés de la soudure et diminuer les défauts des soudures. On peut citer, par exemple, le soudage laser à distance (remote laser welding), des mises en forme de faisceau (spot de forme oblongue, bi ou multi-spots...), l'application d'une pression gazeuse dynamique sur l'ouverture du keyhole, l'utilisation de buses de distribution de gaz particulières, ou encore la mise en oeuvre d'une source d'énergie additionnelle, tel qu'un arc TIG, MIG/MAG ou plasma pour obtenir un soudage hybride arc/laser.

Ces différents dispositifs ou méthodes permettent de produire des modifications de la géométrie de l'ouverture du keyhole et de la stabiliser plus ou moins.

Il s'ensuit classiquement une augmentation de la taille du keyhole, qui devient supérieure à celle du faisceau laser qui vient frapper la surface de la pièce à souder.

Ainsi, dans le cas d'un contrôle de la forme du faisceau (oblong, bi-spots...), la dimension de l'ouverture du keyhole est liée à la section de la forme particulière du faisceau laser, alors qu'en soudage à distance avec faisceau oscillant ou utilisant un gaz d'assistance ou une source de puissance additionnelle, la largeur de la cavité du keyhole qui en résulte est supérieure à celle du faisceau.

Des observations analogues ont été faites en soudage à haute vitesse où la largeur du keyhole est liée à l'angle d'inclinaison du front avant du keyhole et de la réflexion du faisceau sur ce front.

Toutes ces méthodes permettent d'augmenter les dimensions du keyhole et du bain liquide mais ne permettent pas d'accroître la profondeur de pénétration de soudage laser, voire engendrent même parfois une diminution de cette profondeur de soudage.

Par ailleurs, le document US-A-6,608,278 décrit un procédé de soudage par faisceau laser, dans lequel sont mis en oeuvre deux faisceaux laser focalisés successivement l'un après l'autre au niveau du plan de joint à souder de manière à obtenir un keyhole unique. Ce procédé permet d'améliorer la qualité de soudage en limitant l'incorporation de matériaux de revêtement dans la soudure, lors du soudage de pièces revêtues, notamment de zinc. Le document JP-A-60240395 enseigne un procédé de soudage laser similaire à celui décrit par US-A-6,608,278.

Le document EP-A-1491279 décrit un procédé de soudage laser où un faisceau laser est divisé en plusieurs sous-faisceaux qui sont focalisés coaxialement et/ou dans un plan perpendiculaire au joint de soudure de manière à obtenir une qualité de joint élevée.

Le document DE-A-19902909 porte sur un procédé de soudage laser où un faisceau laser est divisé en plusieurs sous-faisceaux qui sont focalisés en plusieurs points de focalisation situés sur le plan de joint et/ou de part et d'autre dudit plan de joint.

En outre, on peut citer aussi les documents DE-A-10113471 et EP-A-1350590 portant sur du soudage hybride laser-arc.

Dès lors, un problème qui se pose est d'améliorer les procédés de soudage laser existants de manière à accroître la pénétration de soudage.

Une solution à ce problème est alors un procédé de soudage par faisceau laser d'au moins une pièce métallique, de préférence de deux pièces métalliques l'une avec l'autre, dans lequel :
a) on met en oeuvre un premier faisceau laser et on focalise ledit premier faisceau laser de manière à ce qu'il vienne frapper au moins une pièce à souder et créer un capillaire de type heyhole comprenant une ouverture de keyhole,
b) on met en oeuvre un second faisceau laser et on focalise ledit second faisceau laser dans l'ouverture de type heyhole créée par ledit premier faisceau laser, et
c) on réalise un soudage progressif de la ou des pièces par fusion du métal de la ou des pièces à souder, aux points d'impact des faisceaux laser avec la ou les pièces à souder,
et dans lequel la profondeur de pénétration (x) du premier faisceau laser et la profondeur de pénétration (y) du second faisceau laser sont telles que : y > x où x est la profondeur du keyhole créé par le premier faisceau laser.

Selon le cas, le procédé de l'invention peut comprendre l'une ou plusieurs des caractéristiques suivantes :
- le premier faisceau laser est distinct du second faisceau laser.
- la longueur focale (f2) du second faisceau laser et la longueur focale (f1) du premier faisceau laser sont telles que f2 > f1, de préférence telles que : f2 = f1 + x où x est la profondeur de keyhole obtenue avec le premier faisceau laser.
- les faisceaux laser sont obtenus à partir d'un faisceau principal qui est divisé en lesdits deux faisceaux ou à partir de deux faisceaux laser distincts de même longueur d'onde ou de longueurs d'onde différentes.
- on met en oeuvre un premier flux de gaz pour exercer une pression dynamique gazeuse, de préférence continue et constante, sur l'ouverture du capillaire de vapeurs créé par le premier faisceau laser pour la maintenir ouverte et on met en oeuvre, en outre, un deuxième flux de gaz de protection distribué périphériquement au premier flux de gaz.
- le débit du premier gaz est de l'ordre de 5 à 30 l/min, de préférence de l'ordre de 10 à 20 l/min, et le débit du deuxième gaz est de l'ordre de 15 à 40 l/min, de préférence de l'ordre de 20 à 30 l/min.
- la buse distribuant le premier flux de gaz est dirigée vers le keyhole. Elle peut être approximativement coaxiale au keyhole ou alors placée devant ou derrière ledit keyhole.
- le premier et le deuxième gaz sont choisis parmi l'argon, l'hélium, l'azote et leurs mélanges, et éventuellement en plus faible proportion du CO₂, de l'oxygène ou de l'hydrogène.
- le faisceau laser est généré par un générateur laser de type Nd:YAG, à diodes, à fibre d'Ytterbium ou CO₂.
- la ou les pièces métalliques à souder sont en acier au carbone, revêtu ou non, en aluminium ou en acier inoxydable.
- la distance w séparant le premier faisceau laser du deuxième faisceau laser est telle que : a < w < b où : a est la largeur de l'ouverture du keyhole et b est la largeur du fond de keyhole.
- la droite passant par les centres des premier faisceau laser et deuxième faisceau laser est parallèle à la direction de soudage ou forme un angle compris entre 1 et 60° par rapport à ladite direction de soudage, de préférence un angle compris entre 1° et 45°.
- un arc électrique est généré au niveau du keyhole de manière à élargir et stabiliser le keyhole.
- la buse distribuant le premier gaz a une ouverture de passage de gaz inférieure à la buse distribuant le deuxième gaz.

L'invention va être mieux comprise grâce à la description suivante faite en références aux figures annexées parmi lesquelles :
- la Figure 1 schématise un procédé de soudage laser selon l'art antérieur, et
- les Figures 2, 3a et 3b illustrent la présente invention.

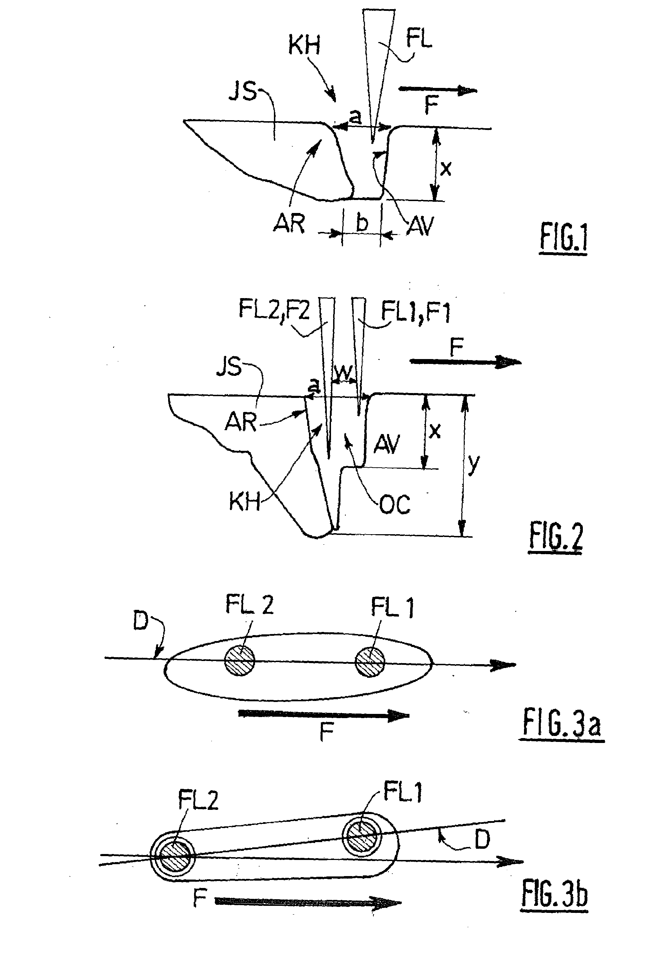

Plus précisément, sur la Figure 1 est schématisé un procédé de soudage par faisceau laser selon l'art antérieur dans lequel on met en oeuvre un faisceau laser FL unique venant impacter et fondre le matériau à souder en y formant un keyho le KH.

Comme susmentionné, lorsqu'on soude par laser en mode keyhole, on crée une cavité ou ouverture dans le métal fondu, le métal étant progressivement fondu par le faisceau au niveau de la partie avant AV de cette cavité FL. Le faisceau laser se déplace relativement par rapport à la ou aux pièces à souder (sens de flèche F), Le métal fondu est repoussé vers la partie arrière AR du keyhole KH où il se solidifie pour former le joint de soudure JS.

Avec un tel procédé, l'ouverture du keyhole KH est approximativement égale à la section du faisceau laser FL au niveau de la surface supérieure de la pièce considérée. Par ailleurs, la profondeur « x » de pénétration du faisceau est limitée et la largeur « b » du fond de keyhole est généralement inférieure ou égale à la largeur « a » de l'ouverture du keyhole.

De là, en réalisant un soudage laser dans ces conditions, la pénétration est toujours limitée à la distance « x ».

La Figure 2 schématise, quant à elle, un procédé de soudage par faisceau laser selon l'invention.

Plus précisément, dans ce cas, on met en oeuvre, d'une part, un premier faisceau laser FL1 que l'on focalise sur la pièce à souder de manière à y créer un capillaire de vapeurs de type heyhole KH avec une ouverture centrale OC et, d'autre part, un second faisceau laser FL2 que l'on focalise dans l'ouverture centrale OC du heyhole KH créé par le premier faisceau laser FL1.

Le soudage progressif (avancée dans sens de la flèche F) de la ou des pièces à souder s'opère donc par fusion du métal aux points d'impact des deux faisceaux laser FL1, FL2 avec la ou les pièces à souder.

Selon l'invention, la profondeur de pénétration x du premier faisceau laser FL1 et la profondeur de pénétration y du second faisceau laser FL2 sont telles que : y > x, c'est-à-dire que le second faisceau FL2 va pénétrer plus profondément dans le matériau à souder que le premier faisceau FL 1.

En d'autres termes, on choisit une longueur focale f2 pour le second faisceau laser FL2 et une longueur focale f1 pour le premier faisceau laser FL1 qui sont telles que : f2 > f1 et de préférence telles que : f2 = f1 + x.

Par ailleurs, la distance « w » entre les axes respectifs des deux faisceaux FL1 et FL2 est typiquement comprise entre a et b, c'est-à-dire a ≥ w ≥ b.

Selon l'invention, le premier faisceau laser FL1 assure donc la création du keyhole et une pénétration d'une distance « x » dans le matériau, alors que le second faisceau FL2 focalisé dans la cavité centrale OC du keyhole KH, permet de fondre le matériau sur une plus grande distance, c'est-à-dire une profondeur plus importante « y ».

Pour mettre en oeuvre l'invention, on peut utiliser un dispositif laser de puissance comprise entre 1 et 20 kW.

En outre, afin de faciliter la mise en oeuvre de l'invention, on peut opèrer une distribution d'un premier gaz en direction de l'ouverture du keyhole pour y exercer une pression gazeuse, de préférence continue, uniforme et constante, apte à élargir l'ouverture du keyhole.

Un deuxième flux gazeux de protection peut avantageusement également être distribué de manière à réaliser une couverture gazeuse protectrice de la zone de soudage servant à empêcher la contamination du bain de soudure par des impuretés atmosphériques et/ou, dans le cas d'un laser de type CO₂, à empêcher la formation de plasma néfaste.

Le premier gaz peut être de composition identique ou différente du deuxième gaz.

Par ailleurs, comme illustré en Figures 3a et 3b, qui sont des vues de dessus grossies de la zone de soudage selon l'invention, les centres des deux faisceaux FL1 et FL2 peuvent être situés sur une même droite D qui peut être parallèle à la direction de soudage représentée par la flèche F (Figure 3a) ou alors former un angle non nul, par exemple compris entre 1 et 45°, avec la direction de soudage (Flèche F), c'est-à-dire en position « décalée » (Figure 3b). En effet, une configuration dite « décalée » est bénéfique dans certaines applications de soudage, notamment pour le soudage de pièces d'épaisseurs différentes positionnées en bout-à-bout jointifs ou à clin, pour le soudage de pièces de même épaisseur positionnées à clin, ou encore en soudage par transparence de plusieurs pièces de même épaisseur ou d'épaisseurs différentes.

De manière générale, l'invention permet de souder efficacement des pièces d'épaisseur allant de 1 à environ 30 mm, de préférence de 5 à 20 mm environ.

## Revendications

1. Procédé de soudage par faisceau laser (FL1, FL2) d'au moins une pièce métallique, dans lequel :
a) on met en oeuvre un premier faisceau laser (FL1) et on focalise ledit premier faisceau laser (FL1) de manière à ce qu'il vienne frapper au moins une pièce à souder et créer un capillaire de type heyhole (KH) comprenant une ouverture de keyhole,
b) on met en oeuvre un second faisceau laser (FL2) et on focalise ledit second faisceau laser (FL2) dans l'ouverture de heyhole (KH) créée par ledit premier faisceau laser (FL1), et
c) on réalise un soudage progressif de la ou des pièces par fusion du métal de la ou des pièces à souder, aux points d'impact des faisceaux laser (FL1, FL2) avec la ou les pièces à souder,
**caractérisé en ce que** la profondeur de pénétration (x) du premier faisceau laser (FL1) et la profondeur de pénétration (y) du second faisceau laser (FL2) sont telles que : y > x où x est la profondeur du keyhole crée par le premier faisceau laser (FL1).

2. Procédé selon la revendication 1, **caractérisé en ce qu'**on soude deux pièces métalliques l'une avec l'autre.

3. Procédé selon l'une des revendications 1 ou 2, **caractérisé en ce que** la longueur focale (f2) du second faisceau laser (FL2) et la longueur focale (f1) du premier faisceau laser (FL1) sont telles que f2 > f1, de préférence telles que : f2 = f1 + x où x est la profondeur de keyhole obtenue avec le premier faisceau laser (FL1).

4. Procédé selon l'une des revendications 1 à 3, **caractérisé en ce que** les faisceaux laser (FL1, FL2) sont obtenus à partir d'un faisceau principal qui est divisé en lesdits deux faisceaux (FL1, FL2) ou à partir de deux faisceaux laser distincts de même longueur d'onde ou de longueurs d'onde différentes.

5. Procédé selon l'une des revendications 1 à 4, **caractérisé en ce qu'**on met en oeuvre un premier flux de gaz pour exercer une pression dynamique gazeuse, de préférence continue et constante, sur l'ouverture du capillaire de vapeurs créé par le premier faisceau laser (FL1) pour la maintenir ouverte et **en ce qu'**on met en oeuvre, en outre, un deuxième flux de gaz de protection distribué périphériquement au premier flux de gaz.

6. Procédé selon l'une des revendications 1 à 5, **caractérisé en ce que** le débit du premier gaz est de l'ordre de 5 à 30 l/min, de préférence de l'ordre de 10 à 20 l/min, et le débit du deuxième gaz est de l'ordre de 15 à 40 l/min, de préférence de l'ordre de 20 à 30 l/min.

7. Procédé selon l'une des revendications 1 à 6, **caractérisé en ce que** la buse distribuant le premier flux de gaz est dirigée vers le keyhole.

8. Procédé selon l'une des revendications 1 à 7, **caractérisé en ce que** le premier et le deuxième gaz sont choisis parmi l'argon, l'hélium, l'azote et leurs mélanges, et éventuellement en plus faible proportion du CO₂, de l'oxygène ou de l'hydrogène.

9. Procédé selon l'une des revendications 1 à 8, **caractérisé en ce que** le faisceau laser est généré par un générateur laser de type Nd:YAG, à diodes, à fibre d'Ytterbium ou CO₂.

10. Procédé selon l'une des revendications 1 à 9, **caractérisé en ce que** la ou les pièces métalliques à souder sont en acier au carbone, revêtu ou non, en aluminium ou en acier inoxydable.

11. Procédé selon l'une des revendications 1 à 10, **caractérisé en ce que** la distance w séparant le premier faisceau laser (FL1) du deuxième faisceau laser (FL2) est telle que : a < w < b où a est la largeur de l'ouverture du keyhole et b est la largeur du fond de keyhole.

12. Procédé selon l'une des revendications 1 à 11, **caractérisé en ce que** la droite (D) passant par les centres des premier faisceau laser (FL1) et deuxième faisceau laser (FL2) est parallèle à la direction de soudage (flèche F) ou forme un angle compris entre 1 et 60° par rapport à ladite direction de soudage (flèche F).

13. Procédé selon l'une des revendications 1 à 12, **caractérisé en ce qu'**un arc électrique est généré au niveau du keyhole de manière à élargir et à stabiliser le keyhole et le bain metallique.

14. Procédé selon l'une des revendications 1 à 13, **caractérisé en ce que** la buse distribuant le premier gaz a une ouverture de passage de gaz inférieure à la buse distribuant le deuxième gaz.
